# EUROPEAN PATENT SPECIFICATION

(11) **EP 0 670 538 B1**
(45) Date of publication and mention of the grant of the patent: **19.11.1997**
(21) Application number: 95201411.6
(22) Date of filing: 22.06.1990
(51) Int. Cl.: G06F 1/26, G06F 1/16

(54) **A power supply control system for a computer**
Stromversorgungssteuerungssystem für einen Rechner
Système de commande d'alimentation pour un ordinateur

(30) Priority: 23.06.1989 JP 162229/89; 23.06.1989 JP 162231/89; 23.06.1989 JP 162234/89; 23.06.1989 JP 162228/89
(43) Date of publication of application: 06.09.1995
(62) Divisional of application: 90306840.1
(73) Proprietor: KABUSHIKI KAISHA TOSHIBA, Kawasaki-shi, Kanagawa-ken 210 (JP)
(72) Inventor: Nanno, Nobuyuki, c/o Toshiba Corporation, Tokyo (JP); Akashi, Kazuo, c/o Toshiba Corporation, Tokyo (JP); Seimiya, Hiromi, c/o Toshiba Corporation, Tokyo (JP)
(74) Representative: Shindler, Nigel

(56) References cited:
- EP-A- 0 273 322
- WO-A-86/00154
- DE-A- 3 939 654
- PATENT ABSTRACTS OF JAPAN vol. 009 no. 177 (P-375) ,23 July 1985 & JP-A-60 051926 (CANON K.K.) 23 March 1985,
- PATENT ABSTRACTS OF JAPAN vol. 013 no. 557 (P-974) ,12 December 1989 & JP-A-01 232408 (SHARP CORP.) 18 September 1989,

## Description

This invention relates generally to computers and, more specifically, the power supply of a portable battery operated computer. The invention includes both a system and the method for controlling efficiently the power supply of such a portable computer and to conserve battery power.

As is known, recently computers have been developed which are convenient to carry. In conventional computers of these types, there are two primary methods for supplying the power. In one case, the power is supplied by an alternating current (AC) adapter. In other cases, the power is supplied by internal rechargeable batteries. In these two methods mentioned above, the central processing unit, hereafter called "CPU", must always verify the status of the external power supply and the charge level of the internal batteries. However, in conventional methods and systems of these types, one CPU also must control the voltages' of the external power supply and internal batteries, and this creates a burden for one CPU. The presently known systems and methods for supply control using one CPU are not efficient. Also, the known systems do not include any means for indicating to an operator the voltage of power supply status whether power is off.

The device shown in Patent Abstracts of Japan, vol.009, no.177, 23.07.85 & JP-A-60 051 926 is adapted to wait until a power source cut off key (reset key etc.) has been pressed for a predetermined time before the shut down is effected. Thereby it prevents erroneous processing if said keys were pressed unintentionally for a moment.

EP-A-0 273 322 describes a power supply with a built in microcomputer to monitor and regulate the input voltage for a computer independently of the CPU.

WO86/00154 describes the supply of power from a microcomputer system to an external unit upon plugging said external unit into said microcomputer system.

FR26 22 749 discloses a power supply having a rechargeable battery in which the charging current and voltage are controlled by a microprocessor.

Accordingly the present invention provides apparatus for controlling the operation of a computer system having a computer body, a main power switch having an ON or OFF state, a display cover having a closed position against the computer body and swingable away from the body to an open position, and a display switch which is an ON and OFF state depending on whether the display cover is open or closed, the apparatus comprising:
first determining means for determining whether the display cover is closed, when the power switch is turned on; and
means for inhibiting the operation of the computer system when the display cover is closed.

Other objects, features, and advantages of the present invention will become apparent from the following detailed description. It should be understood, however, that the detailed description and specific examples while indicating preferred embodiments of the invention, are given by way of illustration only, since various changes and modifications will become apparent to those skilled in the art from this detailed description.

Other objects and features of the present invention will be apparent from the following description by way of example only taken in connection with the accompanying drawings, in which:
Figure 1 is a schematic block diagram illustrating a power supply control system with a power control microprocessor for use in a computer system, according to one embodiment of this invention;
Figure 2 is a diagram illustrating the power control microprocessor shown in Fig.1;
Fig.3 and 4 (a), (b) are flowcharts illustrating sequences to control the power supply when a power switch ON or OFF, which are performed by the power control microprocessor;
Fig.5(a) is a perspective top view of a computer system in which the invention is used.
Fig.5(b) is a perspective view of the principal part of a push-button-power-switch in the computer system;
Fig.6 is a diagram illustrating the operating states and layout of LED's used with the invention.

### Detailed Description of the Preferred Embodiments

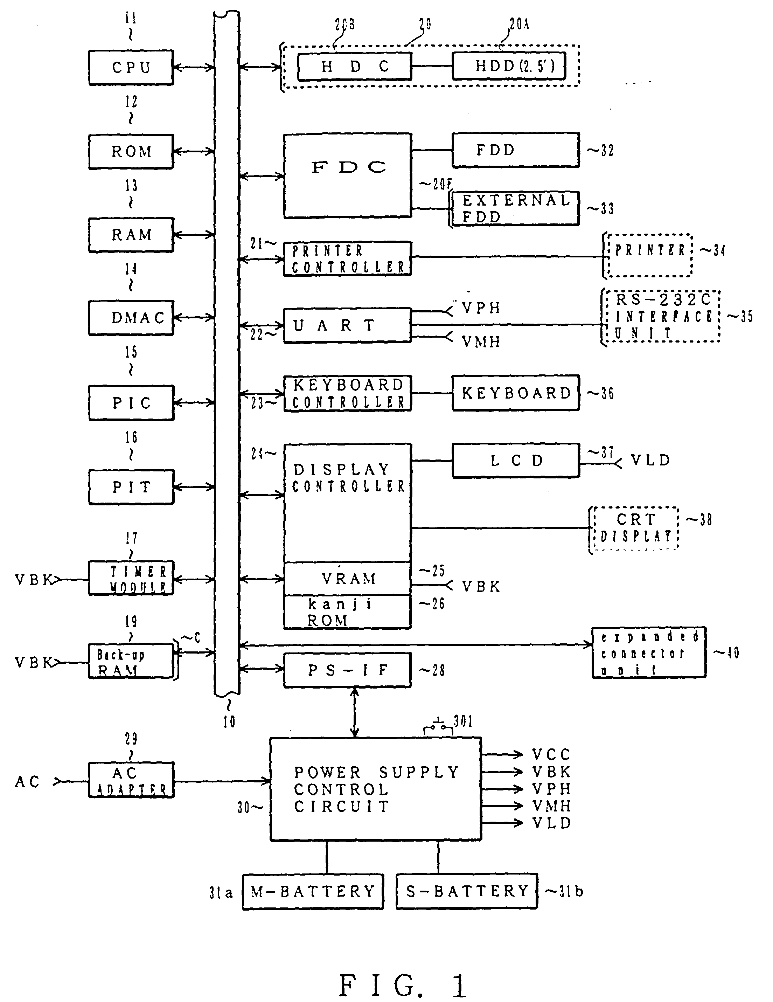

Fig.1 is a schematic block diagram illustrating a power supply control system with a power control microprocessor for use in a computer system according to one embodiment of this invention.

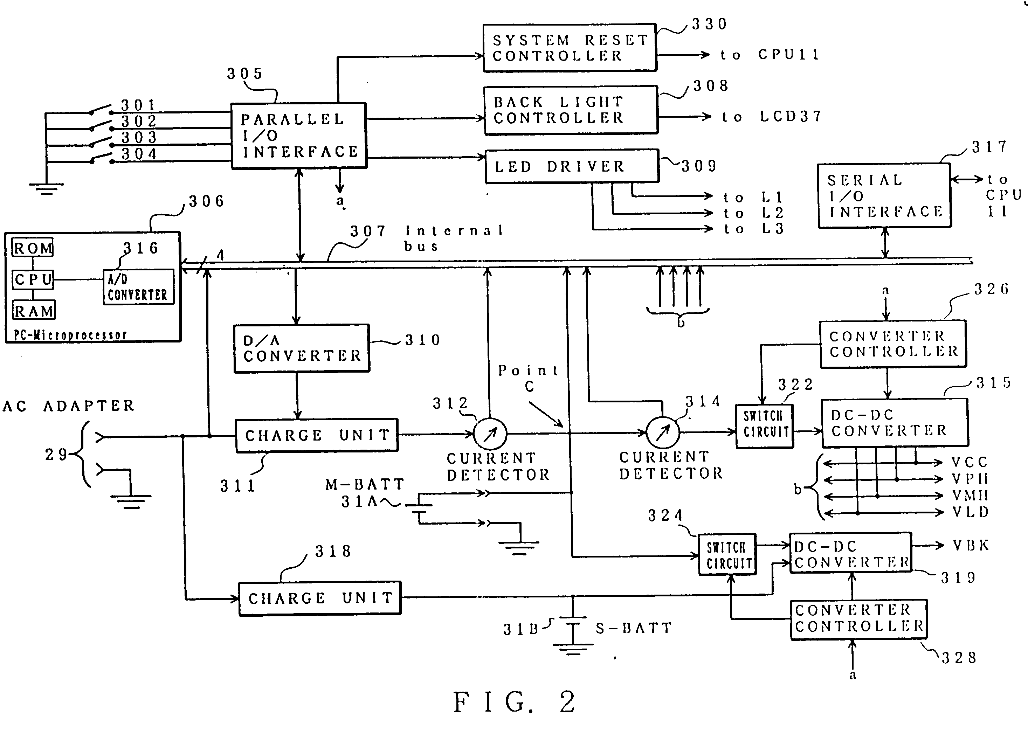

As illustrated, computer system 1 includes a CPU 11 for operating the computer system 1 using programs in programmed Read Only Memory (ROM) 12 which stores a basic input or output system program therein, a random Access memory (RAM) 13 which stores application programs and data, and a direct memory access (DMA) controller 14 for controlling the transmission of data directly bet between RAM 13 and an input/output apparatus, for example, hard and floppy disc drives. A programmable interrupter controller (PIC) 15, a programmable interval timer (PIC) 16, and a real-timer clock (RTC) 17 having a timer module supply with a back-up voltage (hereafter called VBK +5VDC) are also provided. A expanded RAM 18 using particular card slots provides the VBK (not shown) and a Back-up RAM 19 having display data therein contains the contents of a program counter for a currently-running program, various registers and a memory and I/O statuses, so that it can restart an interrupted job when repowered. A hard disk pack 20 may fit particular card slots, which comprise a 2.5 inch hard disk drive (HDD) 20A and a hard disk controller (HDC) 20B. A floppy disk controller (FDC) 20F may control access to a floppy disk drive (FDD) 32 connected thereto. A printer controller (PRT-CONT) 21 may control access to a printer 34 connected thereto by a cable. A universal Asynchronous Receiver/Transmitter (UART) 22 provides a serial input/output interface, which is provided with a voltage VPH (+12VDC) and a voltage VMH (+9VDC) and keyboard controller (KBC) 23 controls a keyboard 36 connected thereto. A display controller (DISP-CONT) 24 controls display of data on an LCD display device Video Random Access Memory (VRAM) 25 is a refresh memory to store data on LCD 37 or CRT 38, which is provided with the VBK. A kanji-ROM 26 is accessed by kanji character codes, and stores kanji characters patterns. An interface 28 control of the power supply circuit (PF-IF) is connected to CPU 11 via a system bus 10 as shown Fig.2. An AC adapter 29 converts an AC voltage (+120 V) to a DC voltage (+12 VDC) and is plugged to a portable computer via a DC-in-12V pack. A main battery (M-BATT) 31A, as well as a sub battery (S-BATT) comprises a chargeable battery (i.e., a nickel-cadminum battery) to provide DC +7 to +8V, and comprises a removable pack. An external floppy disk drive 33 may be connected to FDC 20F by a cable. An RS-232C interface may be connected to an input/output interface 22 by a cable. and LCD 37 may be connected to DISP-CONT 34, which is provided with VLD (-22DVC)or an expansion connector 40 may be connected to expanded units by a cable. It will be appreciated that different system configurations are possible.

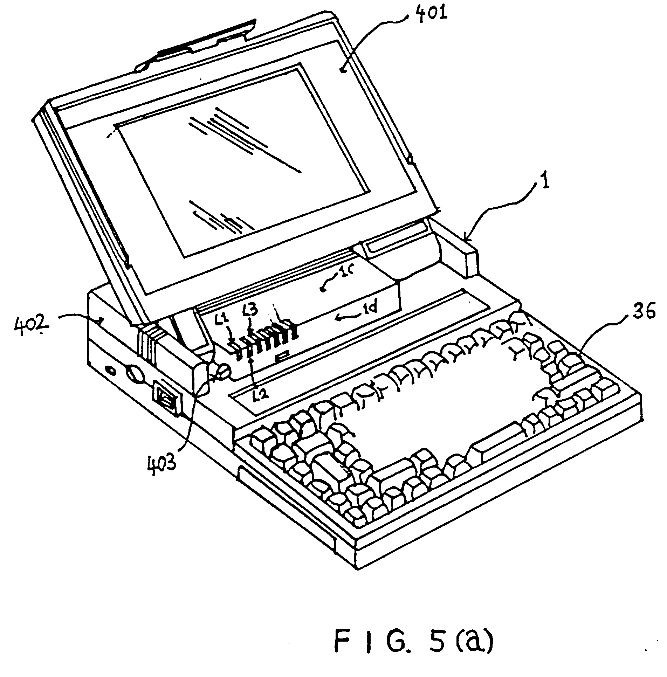

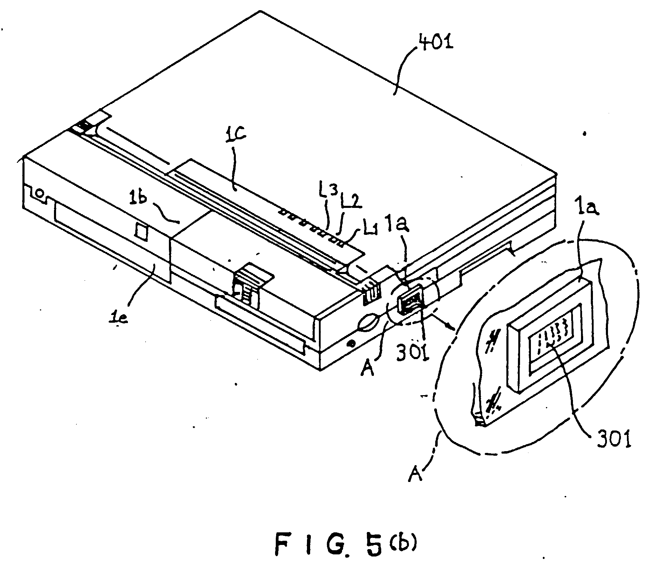

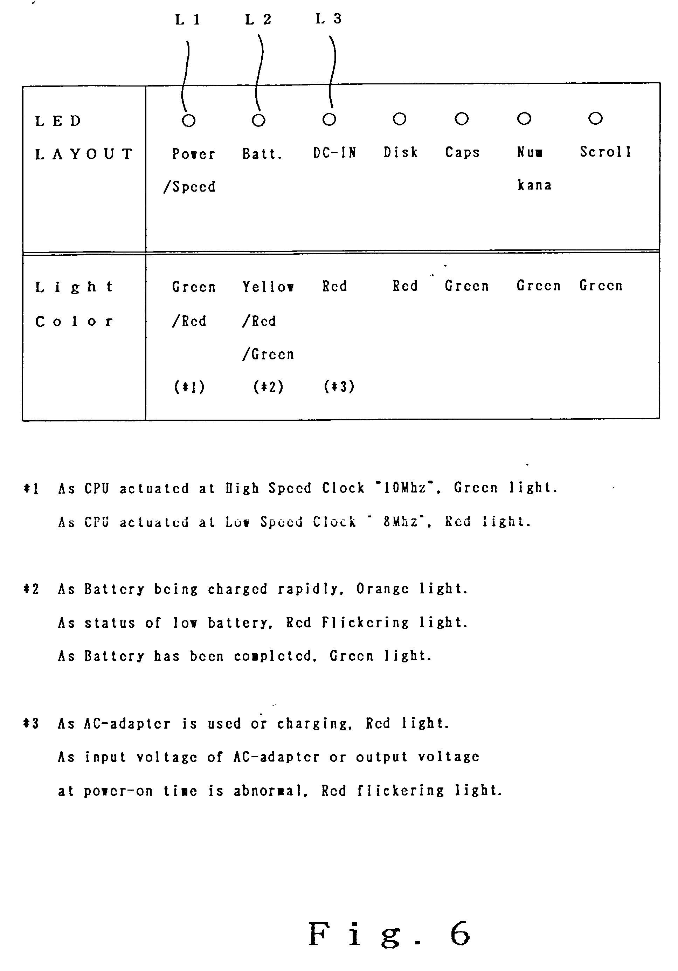

As shown in Fig.2, the power supply control circuit 30 has a built-in 4-bit one-chip microprocessor 306, which may be a module TMP47C440AF (a Toshiba product). The power control micro-processor 306 (PC-microprocessor) is always provided with the power supply of the M-battery (not shown) The PC-microprocessor 306 like the main computer system described above, also comprises a CPU, RAM for storing data; and a ROM for storing a control program. In addition PC-microprocessor 306 may control the power supply supplied to each of computer's components in accordance with current states flowing from charge unit 311 to M-BATT 31A and DC-DC converter 315, which are detected by current detectors 312, 314, and switching ON/OFF states which are changed by a power-switch 301. A reset switch 302, a display switch 303, and a mode switch 304 are provided. Parallel I/O (PIO) interface 305 is connected to a power-switch 301, and a reset switch 302 for initializing computer components is included. A switch 303 for supplying the power supply to LCD 37, and a mode switch 304 for setting a mode to actuate the expansion unit are provided. The parallel I/O interface may hold the ON/OFF state of the switches mentioned above. The interface 305 sends the states mentioned above to PC-microprocessor 306 via the internal bus 307 or DC-DC converter 315 directly. A back-light controller 308 may output a power supply to be supplied into LCD 37 in accordance with a set of a variable register, so that the intensity of radiation of the back-light is changed. LED driver 309 may control an LED L1 for indicating the ON/OFF state of power switch 301 and the clock speed of CPU 11, an LED L2 for indicating the capacity of the battery voltage, or an LED L3 for indicating whether AC adapter 29 is present, as shown in Fig.5 (a). The LED displays may be three different colours (red and green or orange), as shown Fig.6. When the green light in LED L1 is on, CPU 11 is being operated at high clock speed 10MHz. When the red light in LED L1 is on, CPU 11 is being operated at low clock speed 8 MHz. When the orange light in LED L2 is on, batteries 31A, 31B are being charged rapidly. When the red light in LED L2 is flickering, the voltage of M-battery 31A is low. When the green light in LED L2 is on, its charging is completed. When the red light in LED L3 is on, AC adapter 29 is in use or charging. When the red light is flickering, an abnormality is present in the input voltage of AC adapter 29 or the output voltage at the power-on time or the self test of the power supply is abnormal. A digital-to-analog (D/A) converter 310 may convert the output from PC-microprocessor 306 to an analog signal, i.e., a control-signal, and send it to charge unit 311. Charge unit 311, which comprises a 256 bit DC-DC converter, may charge M-battery 31A in accordance with the charge-control-signal sent from D/A converter 310. Current detector 312 may detect a total direct current flowing to M-battery and DC-DC converter 315. A current detector 314 may detect the direct current flowing to DC-DC converter 315. A DC-DC converter 315 may convert a DC voltage (+12DVC) supplied from AC adapter 29 or M-battery 31A to the power supply voltage of, for example, +5V, +12V, -9V, -15V, +5V and +12V, which are supplied to computer system 1. An analog-to-digital (A/D) converter 316 may convert analog input voltages, which are current values of the current detectors, output voltage of M-battery 31A and power supply of the individual powers, to a digital voltage, which is sent PC-microprocessor 306. A/D converter 316 may have an 8-channel analog input terminal, so as to equally divide an input analog voltage into 255 sections. A serial I/O interface (SIO) 317 may communicate the commands sent between PC-microprocessor 306 and main CPU 11. A charge unit 318 may charge a S-battery 31B. DC-DC converter 319, as well as DC-DC converter 315, may convert to voltage of charge unit 318 and S-battery 31B to the VBK to be supplied to RAM 13, expanded RAM 18, back-up RAM 19 and VRAM 25.

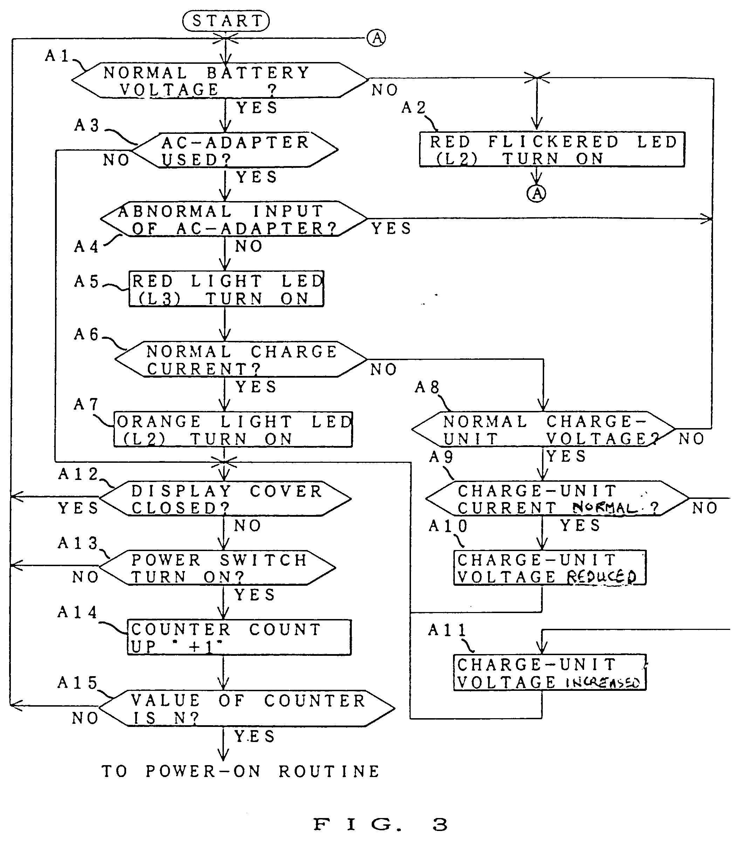

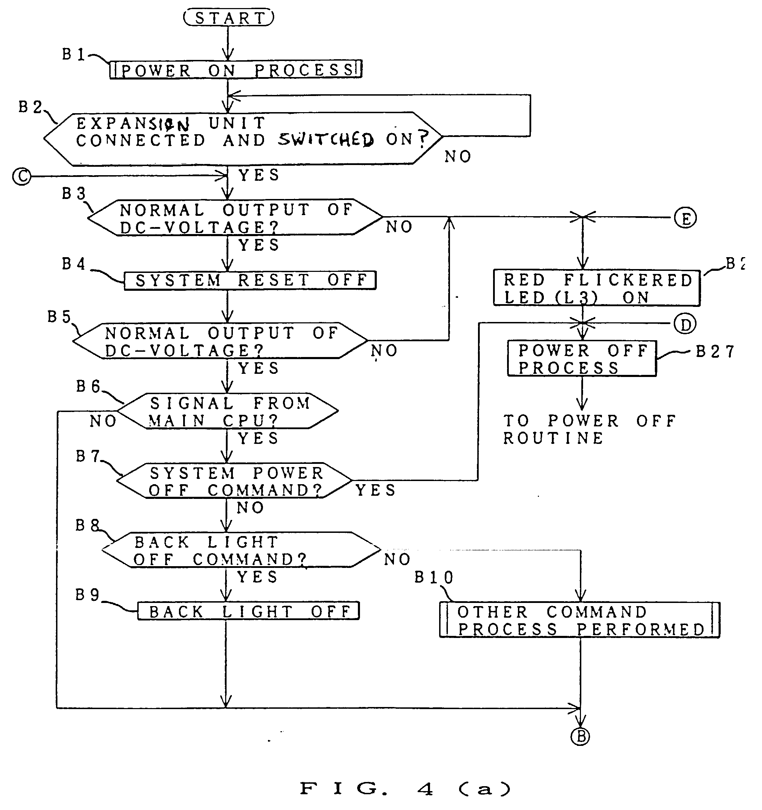

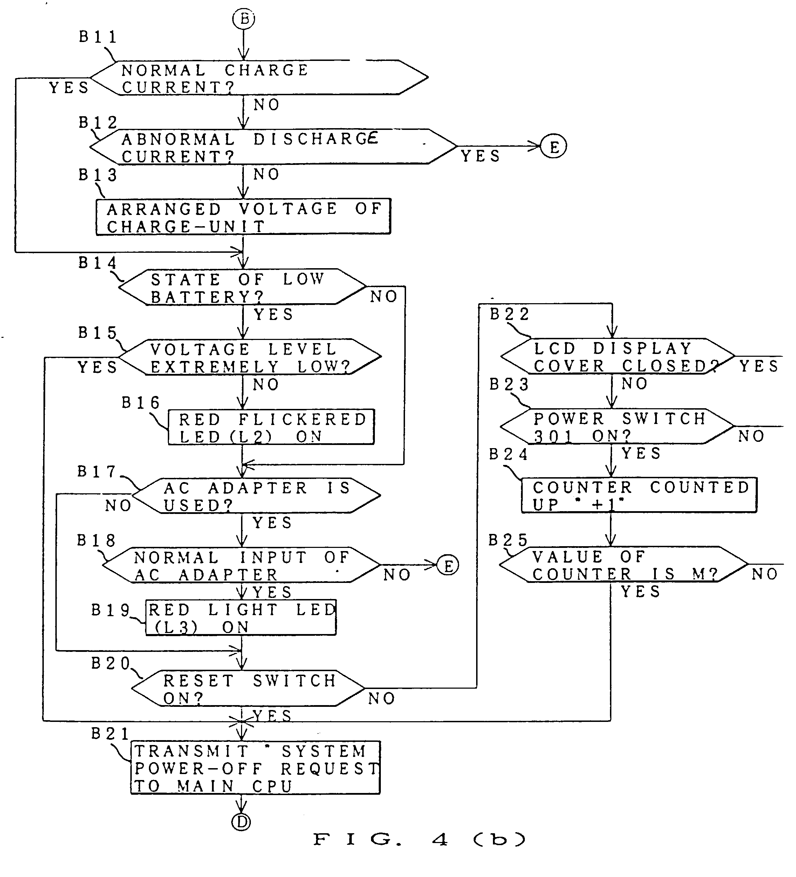

Each of Figs.3 and 4. illustrates a flowchart of a control sequence performed by PC-microprocessor 306.

Fig.5 is perspective top view of a computer system 1. Fig.5 (a) is a perspective view illustrating when a display cover of the portable computer 1 is being cleared. Fig.5(b) is an expanded perspective view of the power-switch 301 shown by letter A. As shown in Fig.5 (b), a wall 1a along the edge of push-button-switch 301, referred to as a "protect wall" hereafter, is formed so as to enclose push-button-switch 301 on the side surface 405 of the computer body 402, so that it may prevent an operator from inadvertently pushing push-button-switch 301 while carrying a computer system 1. However is possible for an operator to intentionally push the push-button-switch 301 anytime. The LED displays of L1, L2, and L3, etc., respectively are formed in a corner part of the computer body 402 in rectangle 1b at the rear top surface 1c, the flat edge surface 1d and rear surface 1e. Therefore, an operator can easily identify the LED display state, which represent the operating states of the components mentioned above, regardless of whether display cover 401 is open or closed.

The flowcharts in Figs.3 and 4 describe a process routine in which PC-microprocessor 306 controls the power supply. The PC-microprocessor 306 in power supply control circuit 30 detects the ON/OFF state of the power switch 301 at all times. Thus, PC-microprocessor 306 executes the power-off routine in Fig.3 if the power-switch 301 is off. In case the power-switch 301 is on, the ON state of the power switch 301 is held in PIO interface 305 and the state signal is sent to PC-microprocessor 301 through PIO interface 305. PC-microprocessor 301 acknowledges the fact that the power-switch 306 is on in step A13.

Thus, in step A1, it is determined whether the M-battery voltage is above a predetermined Level. The M-battery's voltage value is transferred to PC-microprocessor 306 through A/D converter 316. If the determination in step A1 is NO, PC-microprocessor sends a signal, which causes the red light in the LED L2 to flicker as shown Fig.6. LED driver 309 sends this through the PIO 305 interface in step A2, and it is returned in step A1.

If the determination in step A1 is YES, it is determined whether AC adapter 29 is in use in step A3. Thus, a voltage value transferred to PC-microprocessor 306 through A/D converter 316 may be anywhere between 0.4VDC and 10VDC. If PC-microprocessor 310 determines that AC adapter 29 is in use, the process jumps to step A12.

If the determination in step A3 is that adapter 29 is present, it is determined whether the voltage value supplied from AC adapter 29 may be anywhere between 11VDC and 16DVC. If it is outside the predetermined range, the process jumps to step A2 If it is within the predetermined range, the process advances to step A5, where PC-microprocessor 306 sends a signal to LED driver 309 through PIO 305. Thus, it means that the red light in LED L3, as shown Fig.6, is ON.

In step A6, it is determined whether the value of charge current supplied to M-battery 31A by charge unit 311 is above a predetermined value. If so, the charge current detected by current detector 312 at point C is transferred to PC-microprocessor 306 through A/D converter 316. If the determination in step A6 is YES, an orange light in LED L2 in step A7, as shown Fig.6, is driven according to the control signal output from PC-microprocessor 306 to LED driver 309 through PIO 305 when the detected charge current is held at a predetermined value or green light in LED L2 in step A7 is driven when the charge capacity of M-battery 31A is adequate. By driving LEDs constituted by two colors, the operational state of the computer system may be signaled in detail even when the display cover 401 is being closed. If the determination in step A6 is NO, it is determined whether the voltage value of charge unit 311, as shown Fig.2, may be anywhere between 5VDC and 10.5VDC. If the determination in step A8 is NO, it returns to the program process in step A2. If the determination in step A8 is YES, the process advances to step A9 where it is determined whether the current value of the charge-unit 311 is higher than a predetermined value. If the determination in step A9 is NO, the process advances to step A11, where charge-unit 311 performs one step-up. This means that the voltage value, which may be anywhere from 3.0VDC and 11.0VDC, outputted from charge unit 311 is divided by 256 (referred to as "one step" hereafter) is added to the voltage charging up M-battery 31A so far, in accordance with the signal from PC-microprocessor 306 through D/A converter 310. On the other hand, if the determination in step A9 is YES, the charge-unit 311 may perform a one step-down. This means that the voltage value to charge-up M-battery 31A goes down one step in step A10, in accordance with the signal from PC-microprocessor 306 through D/A converter 310.

After those process in steps 10 or 11, mentioned above, have been performed, the process advances to step A12 where it is determined whether display cover 401 is closed in accordance with the switch signal representing an ON/OFF state of switch 303. This is transferred through PIO interface 305. The following describes how the ON/OFF state of switch 303 is detected. A line which connects switch 303 to PIO 305 is set in advance at high level "1" and then, when display cover 401 is closed, switch 303 turns on and the line is grounded, thus changing the line's logical level from "1" to "0". In this manner, the ON/OFF state of switch 303 may be detected. If the determination in step A12 is YES, the process jumps to step A1. On the other hand, the process advances to step A13 if the determination in step A12 is NO.

In steps A14 and A15, whenever PC-microprocessor 301 acknowledges the fact that the power-switch state is on, a counter (not shown), referred to as "CTR" hereafter, after detects the time of pushing the power-switch 306 by an operator, is incremented by 1, and the processes in steps A1 through A15 in Fig. 3 are repeated until the counter reaches a predetermined value.

The power-off-routine mentioned above from A1 to A15 is repeated until an operator has pushed a power switch 301. If the CTR counts up to a predetermined value, for for example N or a certain times, the power-on routine is performed.

In step B1, the power-on routine, the PC-microprocessor 306 sends control signals for controlling the DC-DC converter controller 326, 328, to them through PIO interface, and the DC-DC converter controller 326, 328 may control DC-DC converter 315, 319 when switches 322, 324 are turned on at OVDC in turn by the converter controllers 326, 328, and the power supply begins to be supplied to each of computers components (not shown).

In next step B2, it is determined whether the expanded unit 40 has been connected and its power-switch turned on in accordance with the switch signal representing the ON/OFF state of a mode switch 304, which is transferred through PIO 305. If the determination in step B2 is NO, step B2 is repeated. On the other hand, if it is determined that the state of the mode switch 304 is ON, the process advances to step B3 where it is determinated whether DC-DC converter 315 supplies, for example, +5VDC, +12VDC, -9VDC, -22VDC to computer's components, which voltages of its power supply are sent to PC-microprocessor 306 through A/D converter 316. If the determination in step B3 is NO, the process advances to step B26 where PC-microprocessor 306 sends the signal to LED driver 309 through the PIO interface 305. This means that LED L3 is flickering red, as shown Fig.6.

If the determination in step B3 is YES, the process advances to step B4 where PC-microprocessor 306 outputs the system reset signal to system reset control circuit 330 through PIO 305, and then system reset control circuit 330 sends the reset signal to main CPU 11. After main CPU 11 receives the reset signal, main CPU 11 sets up the computer's components.

In step B5 as well as step B3, it is determined whether DC-DC converter 315 supplies power to the computer components. If the determination in step B5 is NO, the process skips to step B26. If the determination in step B5 is YES, the process advances to step B6, where it is determined whether main CPU 11 sent commands to PC-microprocessor 306 through PS-IF 28 and SIO 317. If the determination in step B6 is YES, it is determined whether the command is a "System Power Off Command" from main CPU 11, and then if the determination in step B7 is YES, the process skips to step B27 where a system power-off process is performed, which it is described in detail hereafter. If NO in step B7, the process advances to B8, where a PC-microprocessor 306 determines whether the command is a "back light ON/OFF request". If the determination in step B8 is YES, PC-microprocessor 306 sends a "turn off signal" to back-light controller 308 through PIO 305, and back-light controller 308 turns off the back-light in step B9 after receiving the "turn off signal", and the process advances to B11. If the determination in step B8 is NO, it is determined whether AC adapter 29 is in use in step B10, and if present, the red light or red flickering light in LED L3 in step B10 is driven according to the output control signal from PC-microprocessor 306. Also, PC-microprocessor 306 calculates the amount of energy remaining in the M-battery 31A. The manner for calculating the amount of energy remaining was described in a prior application of the same assignee Serial No. 07,134,370, which disclosure is hereby incorporated by reference, if NO is step B6, the process advances to step B11.

In step B11, it is determined whether the charge current value, flowing from charge-unit 311 detected by current detector 312 and the current value flowing from the M-battery to DC-DC converter 315, detected by current detector 314 are transferred to PC-microprocessor 306 through A/D converter 316. If both current values detected are not within predetermined ranges, the process advances to step B12, where it is determined whether the current value flowing from the M-battery is abnormal. If YES in step B12, the process skips to B26, where the red light flickering state of LED L2 is driven. If NO in step B12, charge-unit 311 performs the same step mentioned above. On the other hand, if the determination in step B11 is YES, the process skips to step B14.

In step B14, it is determinated whether the remaining energy level of the M-battery 31A is low. The detection of the low battery state will now be explained. According to the invention of prior application Serial No.07,134,370, of the same assignee, PC-microprocessor 305 changes the voltage value for detecting the low battery in accordance with the current flowing from M-battery 31A, so as to ensure accurate low battery detection. If the determination in step B14 is NO, the process skips to step B17. On the other hand, if YES in step B14, the process advances to step B15, where PC-microprocessor 305 determines whether the voltage value supplied from M-battery 31A to DC-DC converter 315 has decreased below a predetermined voltage value in accordance with the detection of low battery state of M-battery 31A in step B14. If the determination in step B15 is NO, the red light flickering of LED L2, as shown Fig.6, is actuated according to the output control signal from PC-microprocessor 306. The process then advances to step B17, where it is determined whether AC adapter 29 is in use. If the determination in step B17 is NO, the process skips to step B20. On the other hand, if YES in step B17, the process advances to step B18. whether the supply voltage supplied from AC adapter 29 is e.g. 10 VDC or low, e.g. 0VDC. If the determination in step B18 is NO, the process jumps to step B26. On the other hand, if it is YES in step B18, the process advances to step B19, where the red light in LED L3 is driven according to the output control signal from PC-microprocessor 305.

In step B20, it is determined whether the ON or OFF state of reset switch 302 is detected, which is transferred through PIO 305. If the determination in step B20 is NO, it moves to step B22. In step B22, it is determined whether the ON or OFF state of switch 303 is detected, i.e., whether the display cover 401 is open. If YES in step B22, the process returns to step B3. If NO in step B22, the process advances to step B23 where PC-microprocessor 305 determines whether the ON/OFF state of power switch 301 is detected. If a signal transferred through PIO 305 is at a logical level "1", the process returns to step B3. On the other hand, if the signal is at a logical level "0", the process advances to step B24, where if PC-microprocessor 301 may acknowledge the fact that the power switch state is ON, and the CTR is increased by one (+1). In step B25, it is determined whether CTR has counted up to the predetermined value, for example, M times. If NO in step B25, the process returns to step B3.

In step B15 or step B20 or B25, if the determination is YES, the process advances to step B21 and then step B27, where the PC-microprocessor sends the "System Power Off Request" to computer system 1. This is transferred through SIO 317 and PS-IF 28, and then PC-microprocessor waits for the "ACK" signal sent from main CPU 11. In response to this request signal, main CPU 11 returns the "ACK"to the PC-microprocessor.

When the "ACK" signal does not return to the PC-microprocessor, the PC-microprocessor determines that some kind of abnormality, such as a program crash has occurred on the computer system side, and performs an HDD 20 power off sequence to protect HDD 20. Upon reception of the "ACK" signal, the PC-microprocessor waits for the "System Power Off Request" from main CPU 11 for one minute ( five minutes in the case of low battery).

When receiving the "System Power Off Request" from the PC-microprocessor and returning the "ACK" signal thereto, main CPU 11 interrupts the currently-running program and saves the content of memory 13, 18, the I/O statuses, the contents of the registers,etc. into back-up RAM 19 (with a memory capacity of, for example, 16K bytes). This is provided on the computer side. At this time, when FDD 32 or HDD 20A is being accessed, the save operation is performed after an access end is reached (Resume Function).

When the PC-microprocessor waits one minute ( or five minutes) yet does not receive the "System Power Off Command" from main CPU 11, it sends the "Time Out Power Off Request" to main CPU 11.

Upon reception of the "Time Out Power Off Command," main CPU 11 returns the "ACK" signal to the PC-microprocessor and performs the save operation as much as possible until the power is turned off. When the save operation is completed, main CPU 11 returns the "System Power Off Command" to the PC-microprocessor and enters a halt (HLT) mode.

Upon reception of the "System Power Off Command" the PC-microprocessor returns the "ACK" signal to main CPU 11, cuts off the power supply to computer components, and the process advances to the power-off routine.

As mentioned above, PC microprocessor 306 performs the power off routine, as shown Fig.3, when stopping the power supply to computer components, and performs the power on routine when supplying power to them.

Numerous modifications and variations of the present invention are possible in the light of the above teachings. It is therefore to be understood that, within the scope of the appended claims, the present invention can be practiced in a manner other than as specifically described herein.

## Claims

1. Apparatus for controlling the operation of a computer system having a computer body, a main power switch (301) having an ON or OFF state, a display cover (401) having a closed position against the computer body and swingable away from the body to an open position, and a display switch (303,403) which is in an ON or OFF state depending on whether the display cover is open or closed respectively, the apparatus comprising:
first determining means (A12, A13) for determining whether the display cover is closed, when the power switch is turned on; and
means (A12) for inhibiting the operation of the computer system when the display cover is closed.

2. Apparatus according to claim 1, wherein the inhibiting means includes means for inhibiting the supply of power to the computer system.

3. Apparatus according to claim 1 or claim 2, further comprising:
second determining means (A13) for determining whether the main power switch (301) has been operated to turn it on; and
incrementing a counter (A14) only when the main power switch state is ON.

4. Apparatus according to claim 3, further comprising:
third determining means for determining whether the computer system is in an operational state; and
means (A15, B1) for generating a power-on routine and sending control signals to the computer system when the computer system is in a non-operational state and the counter has reached a predetermined number.

5. Apparatus for controlling the operation of a computer system according to claim 1, the computer system having an expansion unit (40) connected to the computer body, and the expansion unit having a second power switch; the apparatus further comprising:
means (B2) for determining whether the power switch of the expansion unit is turned on, when the main power switch is turned on; and
means for inhibiting the operation of the computer system when the second power switch is not turned on.

6. Apparatus according to claim 5, wherein the determining means (B2) also includes means for determining whether the expansion unit is connected to the computer body.

7. Apparatus according to claim 5 or claim 6, further comprising:
means (B4) for generating a system-reset signal to the main CPU (11) when the second power switch of the expanded unit is turned on, the main CPU sets up the computer system components.

8. Apparatus according to claim 7, further comprising:
power control means for controlling the supply of power to the computer system; and
means (30) for supplying power to the computer system so as to perform a power-on process of the computer system, when the main switch is turned on.

## Patentansprüche

1. Vorrichtung zum Steuern des Betriebs eines Computersystems, mit einem Computergehäuse, einem Netzhauptschalter (301), der einen EIN- oder AUS-Zustand hat, einer Bildschirmhaube (401), die eine am Computergehäuse anliegende geschlossene Position hat und die von dem Gehäuse weg in eine offene Position schwenkbar ist, und einem Bildschirmschalter (303, 403), der sich abhängig davon, ob die Bildschirmhaube offen oder geschlossen ist, in einem EIN- bzw. AUS-Zustand befindet, wobei die Vorrichtung aufweist:
eine erste Erfassungseinrichtung (A12, A13), um zu Erfassen, ob die Bildschirmhaube geschlossen ist, wenn der Netzhauptschalter eingeschaltet ist, und
eine Einrichtung (A12), um den Betrieb des Computersystems zu verhindern, wenn die Bildschirmhaube geschlossen ist.

2. Vorrichtung nach Anspruch 1, bei der die Verhinderungseinrichtung eine Einrichtung umfaßt, um die Stromversorgung zu dem Computersystem zu verhindern.

3. Vorrichtung nach Anspruch 1 oder 2, die weiterhin aufweist:
eine zweite Erfassungseinrichtung (A13), um zu Erfassen, ob der Netzhauptschalter (301) betätigt worden ist, um ihn einzuschalten, und
einen Zähler (A14), der nur dann inkrementiert wird, wenn sich der Netzhauptschalter im EIN-Zustand befindet.

4. Vorrichtung nach Anspruch 3, die weiterhin aufweist:
eine dritte Erfassungseinrichtung, um zu Erfassen, ob sich das Computersystem in einem Betriebszustand befindet, und
eine Einrichtung (A15, Bl), um eine Netz-Ein-Routine zu erzeugen und um Steuersignale an das Computersystem zu senden, wenn sich das Computersystem nicht in einem Betriebszustand befindet und der Zähler einen vorbestimmten Wert erreicht hat.

5. Vorrichtung zum Steuern des Betriebs eines Computersystems nach Anspruch 1, wobei das Computersystem eine mit dem Computergehäuse verbundene Erweiterungseinheit (40) hat und die Erweiterungseinheit einen zweiten Netzschalter hat, wobei die Vorrichtung weiterhin aufweist:
eine Einrichtung (B2), um zu Erfassen, ob der Netzschalter der Erweiterungseinheit eingeschaltet ist, wenn der Netzhauptschalter eingeschaltet ist, und
eine Einrichtung, um den Betrieb des Computersystems zu verhindern, wenn der zweite Netzschalter nicht eingeschaltet ist.

6. Vorrichtung nach Anspruch 5, bei der die Erfassungseinrichtung (B2) außerdem eine Einrichtung hat, um zu erfassen, ob die Erweiterungseinheit mit dem Computergehäuse verbunden ist.

7. Vorrichtung nach Anspruch 5 oder Anspruch 6, die außerdem aufweist:
eine Einrichtung (B4), um für die Haupt-CPU (11) ein System-Reset-Signal zu erzeugen, wenn der zweite Netzschalter der Erweiterungseinheit eingeschaltet wird, wobei die Haupt-CPU den Betrieb der Computersystemkomponenten einleitet.

8. Vorrichtung nach Anspruch 7, die außerdem aufweist:
eine Leistungssteuereinrichtung zum Steuern der Stromversorgung zu dem Computersystem, und
eine Einrichtung (30), um dem Computersystem Strom zuzuführen, um den Betrieb des Computersystems einzuleiten, wenn der Netzhauptschalter eingeschaltet wird.

## Revendications

1. Dispositif permettant de contrôler le fonctionnement d'un système informatique comprenant un corps d'ordinateur, un commutateur marche-arrêt principal (301) doté d'un état de MARCHE ou d'ARRET, un couvercle formant écran (401) ayant une position fermée contre le corps de l'ordinateur et pouvant pivoter loin du corps en une position d'ouverture, et un commutateur d'écran (303, 403) qui est en état de MARCHE ou d'ARRET selon la position d'ouverture ou de fermeture du couvercle, respectivement, le dispositif comprenant :
des premiers moyens de détermination (A12, A13) permettant de déterminer si le couvercle formant écran est fermé, lorsque le commutateur marche-arrêt est sur marche ; et
des moyens (A12) permettant d'inhiber le fonctionnement du système informatique lorsque le couvercle formant écran est fermé.

2. Dispositif selon la revendication 1, dans lequel les moyens d'inhibition comprennent des moyens permettant d'inhiber la fourniture d'alimentation au système informatique.

3. Dispositif selon la revendication 1 ou la revendication 2, comprenant en outre :
des seconds moyens de détermination (A13) permettant de déterminer si le commutateur marche-arrêt principal (301) a été manipulé pour être mis sous tension ; et
permettant d'incrémenter un compteur (A14) uniquement lorsque l'état du commutateur marche-arrêt principal est de MARCHE.

4. Dispositif selon la revendication 3, comprenant en outre :
des troisièmes moyens de détermination permettant de déterminer lorsque le système informatique est en état de fonctionnement ; et
des moyens (A15, B1) permettant de générer une routine de mise sous tension et d'envoyer des signaux de commande au système informatique lorsque le système informatique est dans un état de non fonctionnement et que le compteur a atteint un nombre prédéterminé.

5. Dispositif permettant de contrôler le fonctionnement d'un système informatique selon la revendication 1, le système informatique ayant une unité d'extension (40) connectée au corps de l'ordinateur, et l'unité d'extension comportant un second commutateur marche-arrêt ; le dispositif comprenant en outre :
des moyens (B2) permettant de déterminer si le commutateur marche-arrêt de l'unité d'extension est sur marche, lorsque le commutateur marche-arrêt principal est sur marche ; et
des moyens permettant d'inhiber le fonctionnement du système informatique lorsque le second commutateur marche-arrêt n'est pas sur marche.

6. Dispositif selon la revendication 5, dans lequel les moyens de détermination (B2) comprennent également des moyens permettant de déterminer si l'unité d'extension est connectée au corps de l'ordinateur.

7. Dispositif selon la revendication 5 ou la revendication 6, comprenant en outre :
des moyens (B4) permettant de générer un signal de réinitialisation du système à l'UC principale (11) pour que, lorsque le second commutateur marche-arrêt de l'unité étendue est mis sur marche, l'UC principale configure les composants du système informatique.

8. Dispositif selon la revendication 7, comprenant en outre :
des moyens de commande d'alimentation permettant de contrôler l'alimentation du système informatique ; et des moyens (30) permettant de fournir l'alimentation au système informatique de manière à réaliser un processus de mise sous tension du système informatique, lorsque le commutateur principal est mis sur marche.
